# EUROPEAN PATENT APPLICATION

(11) **EP 2 031 109 A2**
(43) Date of publication of application: **04.03.2009**
(21) Application number: 08162915.6
(22) Date of filing: 25.08.2008
(51) Int. Cl.: D04H 13/00, G02B 6/44, H01B 7/288, H01B 13/12, B32B 5/26

(54) **Swellable nonwoven**

(30) Priority: 28.08.2007 DE 202007011991 U
(71) Applicant: CCS Technology Inc., Wilmington, DE 19803 (US)
(72) Inventor: Merbach, Gerhard, 96465 Neustadt bei Coburg (DE); Tischer, Swen, 96465 Neustadt bei Coburg (DE); Wünsch, Günter, 96465 Neustadt bei Coburg (DE)
(74) Representative: Epping - Hermann - Fischer

(57) **Abstract**

A swellable nonwoven comprises a first swellable nonwoven portion (30a) and a second swellable nonwoven portion (30b) which in each case have a multilayer sandwich structure, in a part region (16a) of the first swellable nonwoven portion (30a) at least one layer (11a) of the sandwich structure being partially absent and, in a part region (16b) of the second swellable nonwoven portion (30b), at least two layers (12b, 13b) of the sandwich structure being partially absent, and the first and the second swellable nonwoven portion (30a, 30b) being connected to one another, at least partially overlapping, in the part regions (16a, 16b).

## Description

The present invention relates to a swellable nonwoven, in particular for optical fiber cables or transmission elements which are used in optical fiber cables, to a cable having the swellable nonwoven and to a method for producing the latter.

Swellable nonwovens for optical fiber cables ensure, in what are known as "dry" optical fiber cables, possible protection against possible damage and a certain sealing off against the ingress of water. In the production of cables, they increasingly replace, for example, gel-like filling compounds, in order, on the one hand, to obtain sufficient stability and, on the other hand, to reduce the labor required for producing the cable.

In production terms, swellable nonwovens for optical fiber cables can be produced in a specific length without interruption. This length may be, for example, in the region of 1500 m. However, customers require optical fiber cables, the uninterrupted length of which is greater than the length in which swellable nonwovens can be produced uninterruptedly. Consequently, in the end portions of two individual initial swellable nonwovens, these are joined together, so that, overall, assembled swellable nonwovens of required length can be produced by connecting a plurality of initial swellable nonwovens. The production of such connections has hitherto taken place, for example, by the initial swellable nonwovens being adhesively bonded to one another with the aid of adhesive strips. In this case, however, it is noticeable that the overall thickness of a swellable nonwoven produced in this way is increased markedly in the region of such a connection, as a result of which the dimension tolerances in the production of cables with such an assembled swellable nonwoven may possibly no longer be adhered to in the region of the connection point.

There is therefore the need to produce swellable nonwovens of great length, by means of which the manufacturing tolerances in the production of optical fiber cables are maintained.

This need is taken into account by a swellable nonwoven according to the features of patent claims 1 and 15. Developments and refinements of the invention may be gathered for the subclaims.

According to one embodiment, a swellable nonwoven comprises a first swellable nonwoven portion and a second swellable nonwoven portion. The two portions in each case have a multilayer sandwich structure, in a first part region of the first swellable nonwoven portion at least one layer of the sandwich structure being at least partially removed. In a first part region of the second swellable nonwoven portion, at least two layers of the sandwich structure are at least partially removed. Finally, the first and the second swellable nonwoven portion are connected to one another, at least partially overlapping, in their first part regions in each case.

By virtue of the proposed configuration of a swellable nonwoven, two individual swellable nonwovens are connected to one another in part regions, the connecting portion, together with its two first part regions, having no greater thickness than the individual swellable nonwoven portions themselves on account of its special structure. This takes into account the requirement to maintain manufacturing tolerances. Furthermore, owing to the structure which is formed, restoring forces possibly present, which may tear open the swellable nonwoven in the connection region during production, are also reduced. The nonwoven can therefore be processed normally even in the overlap region.

In a refinement, an adhesive is applied between the overlapping layers of the part regions. The adhesive may be solvent-free. The adhesive provides, between the two swellable nonwoven portions, a connection which can have essentially the same or even slightly improved mechanical properties with respect to the individual swellable nonwoven portions. This, too, facilitates the subsequent further processing of the swellable nonwoven.

Moreover, to improve the mechanical properties of the connecting portion, there may be provision for the first part regions to have a rhombic, rectangular or triangular configuration and to be connected to one another in an overlapping manner. This affords a larger connecting surface, with the result that improved tensile strength, even under thermal load, can be achieved, as compared with the unassembled swellable nonwoven portions. For example, the first part regions may have an edge oblique in relation to the longitudinal direction of the swellable nonwoven. The angle with respect to a longitudinal edge of the swellable nonwoven may amount, for example, to 45°, 60° or 30°.

In another embodiment, an exposed gap is provided in the first part regions in each case. The said gap is located between a first part region of one swellable nonwoven portion and an unremoved layer of the other swellable nonwoven portion in each case. What is achieved by the gap is that swellable nonwoven portions are not superposed completely one over the other during connection, so that an undesirable increase in the overall thickness of the overlapped part regions is avoided. It is expedient to connect the part regions in the longitudinal direction of the swellable nonwoven to one another in an overlapping manner only in a region of 4 to 20 mm or, for example, also in a region of 5 to 10 mm or, for example, of 7 to 12 mm in the longitudinal direction of the swellable nonwoven. As a result, on the one hand, good mechanical stability along with tensile strength is achieved and, at the same time, the protective function of the swellable nonwoven, for example in the event of the ingress of water into a cable, is ensured.

In a refinement, the swellable nonwovens have a sandwich structure with at least three layers lying one above the other. In this case, the two outer layers may comprise, for example, the same material. An inner layer may have a water-absorbing material or else a superabsorbing swelling agent. To increase flexibility under mechanical flexural stresses, for example during bending together to form an envelope, it may be expedient furthermore to slit the first and/or else the second swellable nonwoven portion along the longitudinal direction of the swellable nonwoven, at least in the first part regions.

In a method for producing an assembled swellable nonwoven of this type, therefore, swellable nonwoven portions are provided which in each case have a multilayer sandwich structure. In a first step, in a first part region of the first swellable nonwoven, at least one layer of the sandwich structure is at least partially removed and, in a first part region of the second swellable nonwoven, at least two layers of the sandwich structure are at least partially removed. Subsequently, the layers which have remained in each case are arranged one above the other and are thus connected to one another in an overlapping manner.

This provides an assembled swellable nonwoven having a connection point, the dimensions of which lie within possible manufacturing tolerances. The swellable nonwoven thus provided can be further processed and be used, for example, for producing a cable for optical fibers.

In a refinement, the part regions are laid one above the other and connected to one another in such a way that the butting edges between the unremoved layers of the respective swellable nonwoven and the part regions have a slight spacing. A gap is thereby generated, with the result that the swellable nonwovens, in their connection region, overlap only with the unremoved part layers, and an undesirable increase in vertical thickness is avoided.

The invention is explained in detail below by means of various exemplary embodiments with the aid of the drawing in which:
- Figure 1: shows a detail of a cable with a swellable nonwoven and a connection point, located in it, between two swellable nonwoven portions,
- Figure 2: shows a cross section through a cable according to a first embodiment of a cable,
- Figure 3: shows a cross section through a cable according to a second embodiment of a cable,
- Figure 4: shows a diagrammatic illustration of an assembled swellable nonwoven with two connected swellable nonwoven portions,
- Figure 5: shows a second embodiment of an assembled swellable nonwoven with two connected swellable nonwoven portions,
- Figure 6: shows an illustration of a first swellable nonwoven portion,
- Figure 7: shows an illustration of the second swellable nonwoven portion before connection,
- Figure 8: shows an embodiment of the method according to the invention,
- Figure 9: shows a sectional illustration of a version for producing a swellable nonwoven portion,
- Figure 10: shows a sectional illustration of a third version of an assembled swellable nonwoven with two connected swellable nonwoven portions.

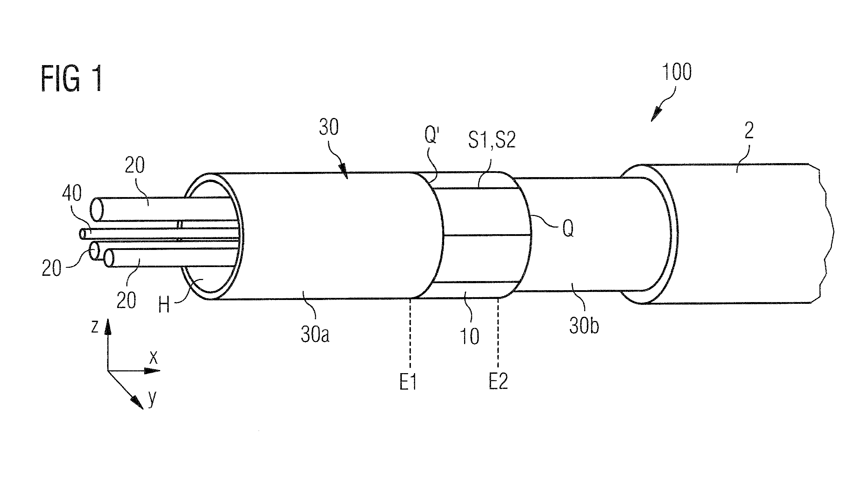

Figure 1 shows an optical cable 100 with a cable core which extends in the longitudinal direction x. In this exemplary embodiment, the cable core has three optical transmission elements 20 which comprise, for example, optical fiber conductors. These are arranged around what is known as a swellable yarn 40. For protection and to prevent a propagation of water in the longitudinal direction of the optical cable, the cable core is surrounded by an envelope H consisting of a swellable nonwoven 30. An outer sheath layer 2 consisting of an extruded polymer is arranged, in turn, around the envelope H. The swellable nonwoven 30 is shaped in that a nonwoven sliver is led through a shaping tube, not illustrated. At the end of this tube, the previously planar nonwoven sliver emerges as an envelope-shaped nonwoven sliver H, as illustrated here.

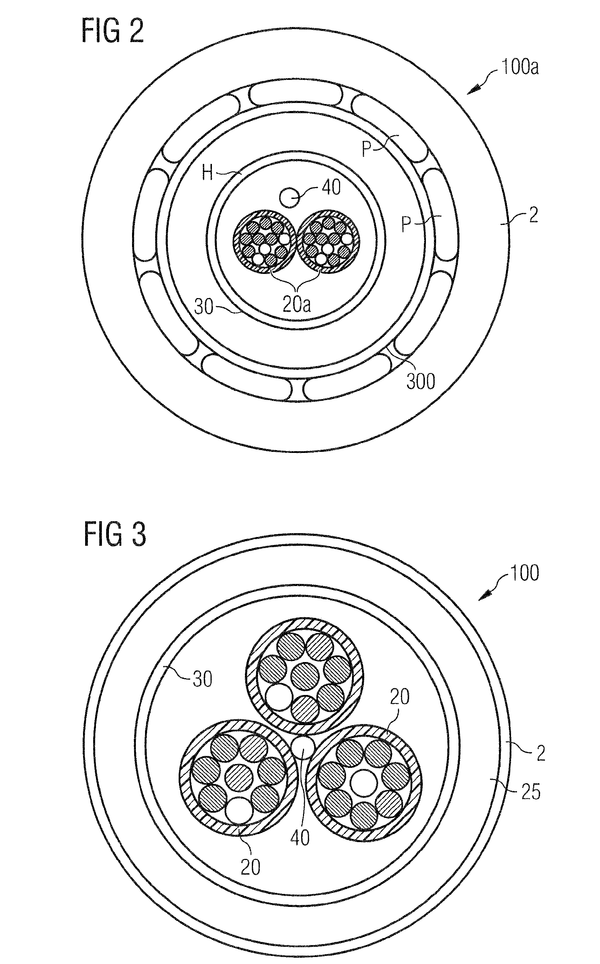

Figure 3 shows a cross section through a similarly manufactured optical cable 100. The individual transmission elements 20 have in each case eight individual optical fibers which are combined into a bundle and are surrounded by a first protective sheathing. The swellable yarn 40 is arranged between the individual transmission elements 20 and can also serve, for example, for stabilizing the cable 100. The swellable nonwoven 30 is formed around the in this exemplary embodiment three optical conductors 20. The swellable nonwoven 30 is surrounded, in turn, by a sheathing 2, while a water-repelling material 25 may be provided between the sheathing 2 and the swellable nonwoven 30.

Figure 2 likewise shows an optical cable with a multiplicity of individual optical fibers. The individual optical fibers are combined here into two bundles 20a and are surrounded by a first protective layer. The two bundles 20a and the swellable yarn 40 are sheathed by a first nonwoven envelope H consisting of a swellable nonwoven 30. In this exemplary embodiment, a water-repelling material is introduced between the first envelope H consisting of the swellable nonwoven 30 and a second envelope consisting of a swellable nonwoven 300. The second swellable nonwoven 300 is subsequently surrounded by a sheathing 2. Additional tension relief elements P between the sheathing 2 and the swellable nonwoven 300 protect the inner elements against damage and at the same time allow a flexible bending of the optical cable.

For manufacturing reasons, a nonwoven envelope consisting of an individual swellable nonwoven of envelope shape, which extends over the entire length of the optical cable 100 or of the cable core, cannot be produced. Consequently, the envelope-shaped swellable nonwoven is composed of individual nonwoven sliver portions. The version illustrated in Figure 1 shows the connection region 10 of an assembled swellable nonwoven 30 with two interconnected portions 30a and 30b. The two portions 30a and 30b are connected to one another in an overlapping manner in the part region 10, as stated in more detail below.

For the production of the nonwoven envelope H, the individual swellable nonwoven portions 30a, 30b are first connected to one another in the overlap region 10, and, subsequently, the assembled swellable nonwoven obtained is shaped into the envelope illustrated. In one embodiment, a plurality of cuts S1 and S2 arranged in the longitudinal direction are provided in the region 10 in the part regions overlapping one another. As a result, a greater flexibility in the circumferential direction is achieved and stresses possibly arising during the envelope-shaping process are reduced or avoided.

Another aspect relates to the thickness of the overlap region 10 in which the two swellable nonwoven portions 30a and 30b are joined together. In the case of a simple adhesive bonding of the two swellable nonwoven portions by a first swellable nonwoven portion being laid over a second swellable nonwoven portion and then these being adhesively bonded to one another, such a production leads to a swellable nonwoven envelope which has a greater thickness in the overlapping portion 10 than in the adjacent swellable nonwoven portions 30a, 30b of the swellable nonwoven 30. As a result, sometimes, during the manufacture of the cable 100 tolerance limits with regard to the dimensions may be exceeded. This would result in complicated correcting measures. For this reason, in the assembled swellable nonwoven, a special connection point is provided in which the thickness is reduced.

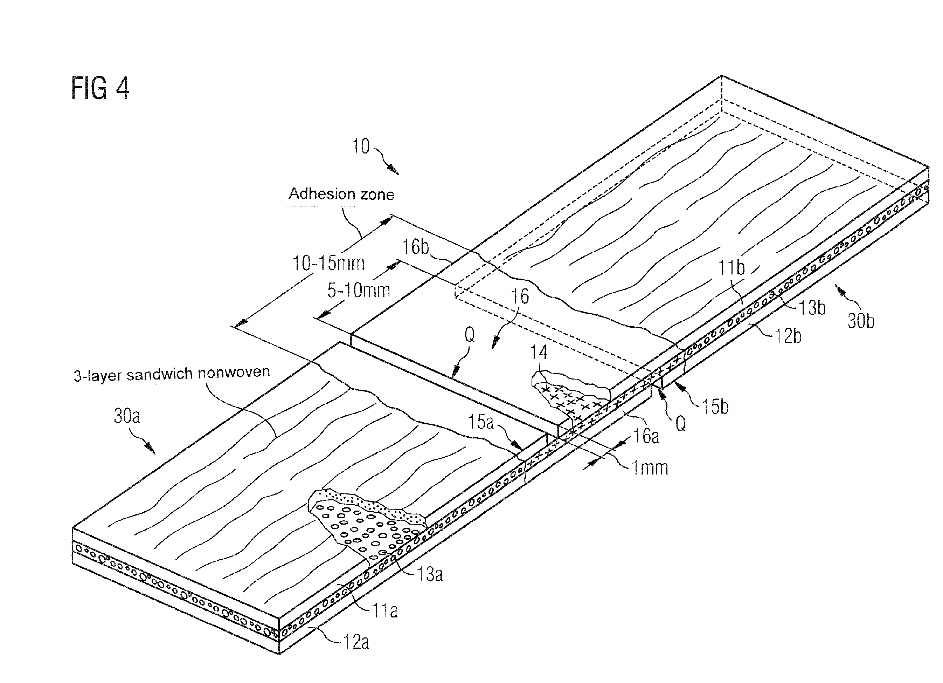

Figure 4 shows a detail of an assembled swellable nonwoven 30 in which the thickness is also reduced in the region of the connection between the two portions. In the region illustrated, the assembled swellable nonwoven has a first swellable nonwoven portion 30a and also a second swellable nonwoven portion 30b and the connection region 10 consisting of two part regions 16a, 16b overlapping one another.

In this configuration, the two swellable nonwoven portions 30a and 30b comprise in each case a sandwich structure with three layers arranged one above the other. The two outer layers 11a and 12a of the first swellable nonwoven portion 30a comprise in each case the same material, for example a polymer, a cellulose product, cotton material or another wool. Correspondingly, the second swellable nonwoven portion 30b also has a sandwich structure consisting of three layers 11b, 13b and 12b arranged one above the other. Between the two outer layers 11a and 12a of the first swellable nonwoven portion 30a and the layers 11b, 12b of the second swellable nonwoven portion 30b, in each case a swellable material 13a and 13b is provided.

The material which is swellable and therefore swells up upon contact with water comprises, for example, a superabsorbing material (superabsorbent powder, SAP). Upon contact with water, this serves for preventing a propagation of the water in the longitudinal direction of the optical cable. For this purpose, moreover, at least one of the two outer layers of the portions 30a and 30b may be designed to be porous, so that water possibly infiltrating can bond with the swelling agent and thus cause the latter to swell. As a result, an optical cable is sealed off in the longitudinal direction by the agent which swells up. The swelling agent may be a powder, a dust or else a gel. It may likewise be incorporated into a further layer.
In a part region 16a, 16b of the two swellable nonwoven portions 30a and 30b, the swelling agent 13a, 13b is removed, as illustrated here. Instead, an adhesive 14 is introduced. Furthermore, in the part region 16a in the first swellable nonwoven portion 30a, all the layers are absent, with the exception of the lower outer layer. The swelling agent and the upper layer 11a are removed in this region. Correspondingly, two of the three layers of the second swellable nonwoven portion 30b are absent, and therefore only the upper outer layer remains in the part region 16b. To connect the two swellable nonwoven portions 30a and 30b, the two layers overlap one another in the region 16 and are adhesively bonded to one another there.

As illustrated here, the length of the adhesion zone amounts, for example, to 10 to 15 mm. As a result, on the one hand, a sufficient tensile strength, at the same time with high flexibility, is achieved. Nevertheless, furthermore, owing to the short adhesion zone, in the event of contact with water it becomes possible for the swelling agents 13a and 13b to swell up in the two contiguous swellable nonwoven portions 30a, 30b, and the cable can thereby be sealed off sufficiently.

By the adhesive 14 introduced being used as a replacement for the middle layer and the swelling agent, the thickness also remains approximately the same in the part region 16 of the two layers overlapping one another as the thickness in the two contiguous swellable nonwoven portions 30a and 30b. If appropriate, the thickness may even be slightly lower. This is the case particularly when the quantity of adhesive 14 is sufficiently small or an intimate connection is made in the region 16 during manufacture, for example, by the two part regions 16a, 16b being pressed together.
For example, the thickness of an assembled swellable nonwoven of the type shown may amount, according to the embodiment in Figure 4, to 0.20 mm in the region of the swellable nonwoven portions 30a and 30b. By the swelling agent being removed in the middle part region and by the adhesive 14 being introduced, the two swellable nonwoven portions are intimately connected to one another. For example, the thickness may even be lower at 0.15 mm.

In order to prevent the layers not removed in each case from overlapping in the part region with the contiguous layers of the other swellable nonwoven portion in each case, a narrow gap Q is additionally provided between the unremoved outer layer of a respective swellable nonwoven portion and the contiguous layer of the other swellable nonwoven portion. In other words, the two unremoved layers do not overlap one another completely, but only partially. An overlap of outer layers is thereby avoided.

Moreover, in a second part region 15a of the first swellable nonwoven portion 30a, the middle inner layer, that is to say the swelling agent 13a, is removed, the outer layers 11a and 12a in each case remaining. The same applies to a second part region 15b of the swellable nonwoven portion 30b. What is achieved by removing the swelling agent 13a and 13b in the regions 15a, 15b and 16a, 16b of the two swellable nonwoven portions 30a, 30b is that no swelling agent can pass into the part region 16 to be adhesively bonded, the result of which will be that the adhesive action would be reduced. Furthermore, during the connecting procedure, excess adhesive can pass into the exposed interspace between the two second part regions and thus contribute to improving the connection of the two swellable nonwoven portions.

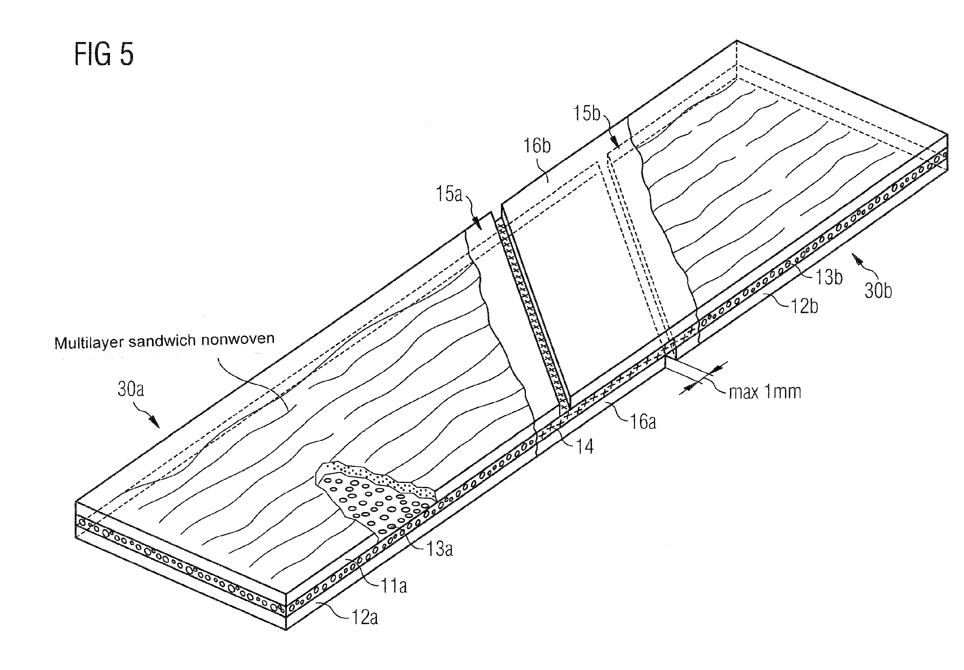

Figure 5 shows a further embodiment with two interconnected swellable nonwoven portions 30a and 30b, the individual swellable nonwoven portions 30a, 30b having in each case a multilayer sandwich nonwoven. In this exemplary embodiment, in the two swellable nonwoven portions, in each case an outer layer and also the inner layer having the swelling agent are removed obliquely with respect to the longitudinal direction of the respective swellable nonwoven. This results in an oblique cut edge and a rhombic overlap region 16b in which a solvent-free adhesive 140 is introduced. By virtue of this rhombic configuration or an "oblique" removal of unnecessary layers of the two swellable nonwoven portions 30a, 30b, a higher tensile strength can be achieved in the connection region and the overlap region 16. Here, too, second portions 15a and 15b are again provided, in which only the swelling agent, but not the outer layers, has been removed.

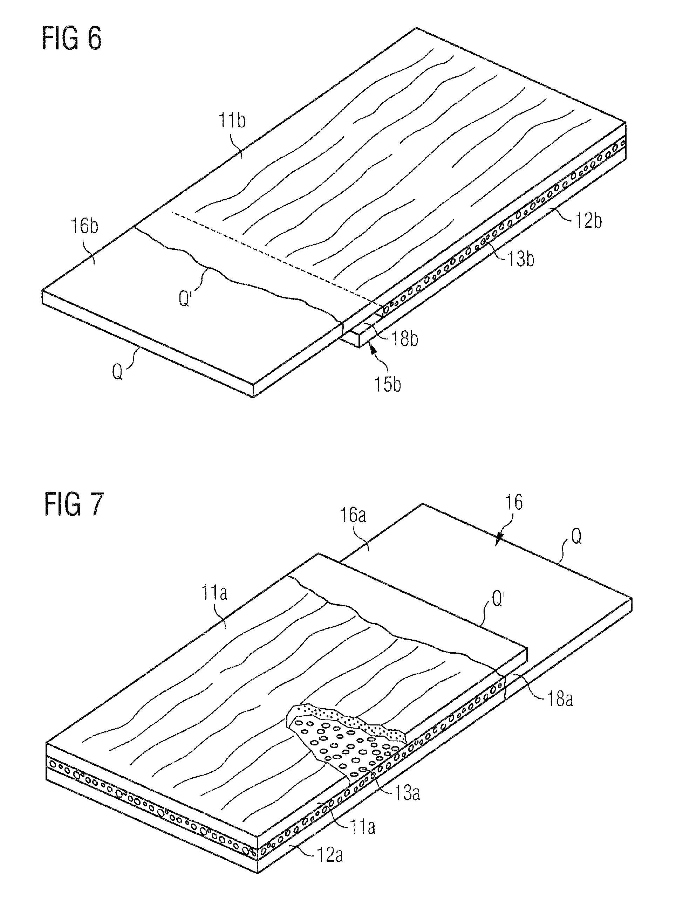

To produce a swellable nonwoven of this type, according to Figure 6, a first part region 16b of a swellable nonwoven portion having a sandwich structure is separated. This may take place, for example, in that the two outer layers are drawn apart and are thus separated from one another. A swellable nonwoven portion with a part region 16b is thereby obtained, in which access can be had individually to the layers 11b to 13b. The individual layers are separated to the extent necessary for the subsequent adhesive bonding operation and for the size of the surface to be adhesively bonded. Subsequently, as illustrated here, at least one of the two outer layers is cut off and, in addition, the swelling agent is also removed. The latter step may be required when an adhesive to be applied bonds with the remaining swelling agent and an adhesive action is not sufficiently ensured.

Figure 6 shows an illustration of a separated swellable nonwoven portion in which the lower outer layer and the swelling agent are removed in the part region 16b. Thus, in the part region 16b, only the upper outer layer is still present. In addition, in a second part region 18b, only the swelling agent 13b has been removed, but the outer layers are still present. The latter step may take place, for example, in that the two outer layers are separated, so that the swelling agent 13b is easily accessible. The lower outer layer is subsequently cut off, not in the completely separated region, but just in front of this. The swelling agent is then removed in the entire separated region, so that the structure illustrated in Figure 6 is obtained.

The same procedure is also adopted in a second swellable nonwoven portion, but here, for example, the other layer in each case may be removed. The latter is advantageous when the two swellable nonwoven portions have outer layers with different material. Then, in each case, the other layer in the two swellable nonwoven portions is removed. Figure 7 shows the result of this production step. Here, too, the two outer layers have been drawn apart and the swelling agent has also been removed in the regions 16a and 18a. The upper layer 11a has subsequently been cut off in the later part region 16 to be adhesively bonded.

To connect the two swellable nonwoven portions, then, an inside of at least one of the two remaining layers is brushed with an adhesive in the part regions 16a and 16b. This adhesive is preferably solvent-free, so that the swelling agent is prevented from swelling up. If appropriate, an adhesive applied in excess may be removed. Subsequently, the surfaces to be adhesively bonded are laid partially one above the other in the region 16, so that the terminating edge Q of the two individual layers are still at a slight distance from the cut edges Q' of the other swellable nonwoven in each case. A small gap is thereby obtained. This ensures, on the one hand, that, during a subsequent pressing operation, adhesive introduced in excess has the possibility of escaping and, on the other hand, an overlapping of the outer layers with the other swellable nonwoven in each case is avoided.

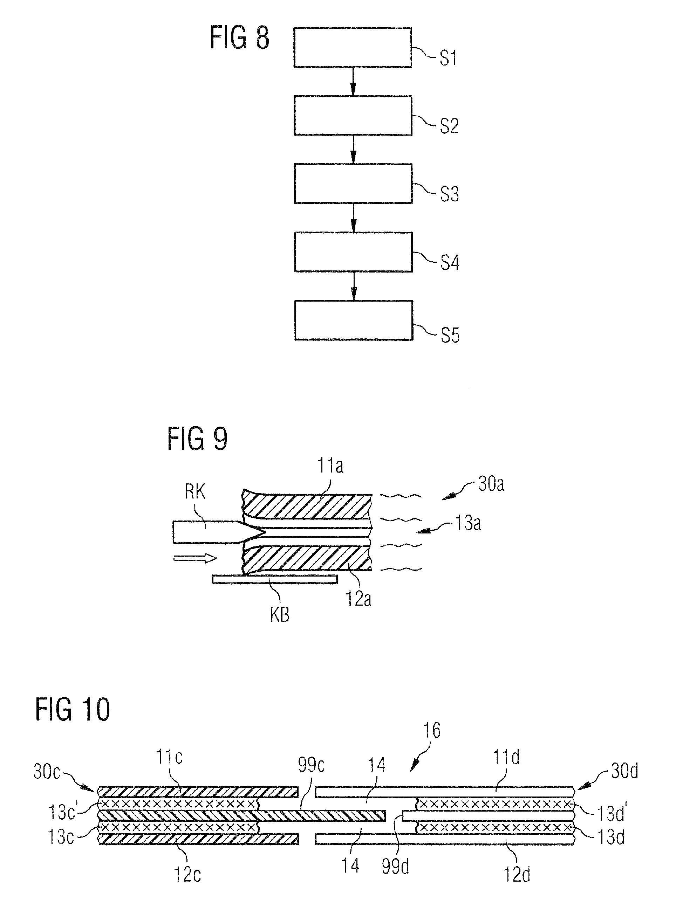

Figure 8 shows an embodiment of a method for producing an assembled swellable nonwoven shown in the preceding figures. In step S1, a first swellable nonwoven portion is provided which comprises a multilayer sandwich nonwoven. In this, in step S2, the two outer layers are separated and at least one outer layer and, if appropriate, one inner or a plurality of layers are removed in a part region. Separation may take place in that one of the two outer layers is fixed and retained, for example by means of an adhesive strip. Subsequently, the unfixed layer is drawn away from the fixed layer in the longitudinal direction. It may be useful, for this purpose, to employ a scalpel, razorblade or similar tool in order to separate the edge of the swellable nonwoven portion. This operation is shown in Figure 9. In the swellable nonwoven portion which comprises more than three layers in a sandwich structure, the lower layer 12a is fixed and retained by means of an adhesive strip KB. A separation of the sandwich structure of the swellable nonwoven portion takes place by means of a razorblade RK in the region of the inner layer 13a which here has a plurality of part layers.

Correspondingly, in step S3, the procedure is carried out correspondingly with a second swellable nonwoven portion, and in this, too, at least one layer is removed. For example, in the two swellable nonwoven portions, the other layer in each case may be removed in a part region. The number of layers to be removed is selected in such a way that, during subsequent overlapping and adhesive bonding, the thickness of the adhesively bonded region is smaller than or equal to the thickness of the contiguous completely swellable nonwoven portions. For example, the layers may be removed in such a way that the number of layers, including an additional adhesive layer, is equal to or smaller than the number of layers of the contiguous swellable nonwoven portions in a sandwich structure.

After the removal of the unnecessary layers of the respective swellable nonwoven portions in step S4, at least one of the two layers is brushed with an adhesive on its inside. Subsequently, the part regions of the two swellable nonwoven portions are connected to one another, at least partially overlapping, in step S5, in that they are laid one above the other in each case with their inside. The inside of a layer is understood in this context to mean the side which is contiguous to an at least partially removed layer. Subsequently, to improve the tensile strength, the connection point may be pressed for a period of time or else be cured thermally.

In this method, a connection between two swellable nonwoven portions is made, the thickness of which is essentially equal to or even smaller than that of the adjacent untreated swellable nonwoven portions. In this case, it must be taken into account that inner layers of the swellable nonwoven portions are partially absent. In the versions illustrated, in each case two layers are laid one above the other and connected to one another.

It is also possible, however, to lay a plurality of layers one above the other and connect them. Figure 10 shows a version of this type. In this, each swellable nonwoven portion 30c, 30d comprises in each case two outer layers 11c, 12c and 11d, 12d. Between these is arranged in each case a structure consisting of two swelling agent layers 13c, 13c' and 13d, 13d' and of a further central layer 99c and 99d. Each swellable nonwoven portion therefore comprises 5 layers overall. In the exemplary embodiment illustrated, the central layer 99d and the contiguous swelling agent layers 13d, 13d' of the second swellable nonwoven portion 30d are removed in the region 16. Correspondingly, the outer layers 11c and 12c and the swelling agent layers 13c, 13c' of the first swellable nonwoven portion 30c are removed. The central layer 99c of the first swellable nonwoven portion 30c is, however, present.

For connection, then, the two outer layers 13d, 13d' of the second swellable nonwoven portion 30d surround the central layer 99c of the first swellable nonwoven portion in the region 16. An adhesive 14 applied on both sides of the central layer 99c connects the two swellable nonwoven portions.

In an embodiment of a swellable nonwoven according to the invention, a thickness of the overlapped part regions 16a, 16b may be essentially equal to a thickness of the first or the second swellable nonwoven portion 30a, 30b.

In a further embodiment of a swellable nonwoven according to the invention, the part regions 16a, 16b may be connected to one antoher in the longitudinal direction in the region of 4 mm to 20 mm or in the region of 5 mm to 10 mm so as to overlap in the longitudinal direction of the swellable nonwoven.

In a further embodiment of a swellable nonwoven according to the invention, the sandwich structure has at least three layers 11a, 12a, 13a lying one above the other.

In a further embodiment of a swellable nonwoven according to the invention, outer layers 11a, 12a, 11b, 12b of the first and/or the second swellable nonwoven portion may have the same material.

In a further embodiment of a swellable nonwoven according to the invention, at least one inner layer 13a, 13b of the first and/or the second swellable nonwoven portion 30a, 30b may comprise a superabsorbing swelling agent.

In a further embodiment of a swellable nonwoven according to the invention, the first or the second swellable nonwoven portion comprises at least one of the following materials:
- cellulose product,
- polymer.

In an embodiment of the invention, the method for producing a swellable nonwoven, the at least one layer of the first swellable nonwoven portion 30a and the at least two layers of the second swellable nonwoven portion 30a have a rhombic, rectangular or triangular design.

All features of the several embodiments shown in the figures and disclosed in the description can be combined with each other. They are not restricted to a specific embodiment.

## Claims

1. Swellable nonwoven, comprising:
a first swellable nonwoven portion (30a) and a second swellable nonwoven portion (30b) which in each case have a multilayer sandwich structure, in a part region (16a) of the first swellable nonwoven portion (30a) at least one layer (11a) of the sandwich structure being partially absent and, in a part region (16b) of the second swellable nonwoven portion (30b), at least two layers (12b, 13b) of the sandwich structure being partially absent, and the first and the second swellable nonwoven portion (30a, 30b) being connected to one another, at least partially overlapping, in the part regions (16a, 16b).

2. Swellable nonwoven according to claim 1, in which an adhesive (14, 140), particularly a solvent-free adhesive, is applied between the overlapping layers of the part regions (16a, 16b).

3. Swellable nonwoven according to any of claims 1 to 2, in which a thickness of the region (16) with the part regions (16a, 16b) overlapping one another is substantially equal or smaller than a thickness of the first or the second swellable nonwoven portion (30a, 30b).

4. Swellable nonwoven according to any of claims 1 to 3, in which the part regions (6a, 16b) are connected to one another so as to overlap in a rhombic, rectangular or triangular manner.

5. Swellable nonwoven according to any of claims 1 to 4, in which a part region cut edge (Q) of the part region (16a, 16b) of one swellable nonwoven portion (30a, 30b) is contiguous to an edge of a layer (12b, 11a) of the other swellable nonwoven portion (30b, 30a) in each case.

6. Swellable nonwoven according to any of claims 1 to 5, in which a gap is present between a part region cut edge (Q) of a present layer of one swellable nonwoven portion (30a, 30b) and an edge of a layer (Q') of the other swellable nonwoven portion (30b, 30a) in each case.

7. Swellable nonwoven according to any of claims 1 to 6, in which at least one of the first and the second swellable nonwoven portions (30a, 30b) has a further part region (15, 15b) in which at least one inner layer (13a, 13b) of the sandwich structure of the at least one swellable nonwoven portion (30a, 30b) is removed.

8. Swellable nonwoven according to any of claims 1 to 7, in which at least one inner layer (13a, 13b) of the first and/or the second swellable nonwoven portion (30a, 30b) comprises a water-absorbing material.

9. Swellable nonwoven according to any of Claims 1 to 8, in which the first and/or the second swellable nonwoven portion (30a, 30b) are/is slit along the longitudinal direction of the swellable nonwoven, at least in the part regions.

10. Method for producing a swellable nonwoven, comprising
- provision of a first swellable nonwoven portion (30a) in a multilayer sandwich structure,
- removal of at least one layer in a part region (16a),
- provision of a second swellable nonwoven portion (30b) in a multilayer sandwich structure,
- removal of at least two layers in a part region (16b),
- overlapping arrangement of the two swellable nonwoven portions in the part regions and connection of the part regions to one another.

11. Method according to claim 10, in which an adhesive (14, 140), in particular a solvent-free adhesive, is applied between the overlapping layers of the part regions (16a, 16b).

12. Method according to any of claims 10 to 11, in which, after the overlapping arrangement, a gap is present between an edge (Q) of a present layer of one swellable nonwoven portion (30a, 30b) and a cut edge of a layer (Q') of the other swellable nonwoven portion (30b, 30a) in each case.

13. Method according to any of claims 10 to 12, further comprising:
- removal of an inner layer (13a, 13b) of the sandwich structure in a further part region of at least one of the first and second swellable nonwoven portions (30a, 30b).

14. Cable, comprising:
- at least one optical transmission element;
- a swellable nonwoven according to one of Claims 1 to 24, which is shaped into an envelope which surrounds at least one optical transmission element;
- a sheathing which is arranged around the swellable nonwoven.

15. Cable according to claim 14, in which a swelling agent is arranged between the swellable nonwoven and the sheathing.
